# EUROPÄISCHE PATENTSCHRIFT

(11) **EP 3 050 790 B1**
(45) Veröffentlichungstag und Bekanntmachung des Hinweises auf die Patenterteilung: **02.05.2018**
(21) Anmeldenummer: 15153187.8
(22) Anmeldetag: 30.01.2015
(51) Int. Cl.: B62M 3/00, B62M 6/50

(54) **Kabelloser Drehzahl-, Drehmoment- und Leistungssensor für Fahrräder**
Cordless speed, torque and power sensor for bicycles
Capteur de puissance, de couple et de vitesse sans fil pour vélos

(43) Veröffentlichungstag der Anmeldung: 03.08.2016
(73) Patentinhaber: NCTE AG, 82008 Unterhaching (DE)
(72) Erfinder: Pröpster, Günter, 80469 München (DE)
(74) Vertreter: Grünecker Patent- und Rechtsanwälte PartG mbB

(56) Entgegenhaltungen:
- WO-A2-2008/109914
- CN-U- 202 491 901
- DE-A1-102007 046 749
- DE-A1-102010 031 848
- GB-A- 2 482 696
- KR-A- 20120 058 757
- US-A1- 2013 024 137

## Beschreibung

### Gebiet der Erfindung

Die vorliegende Erfindung betrifft ein Tretlager mit einer Tretlagerwelle und einer Messvorrichtung zum Messen einer Drehzahl der Tretlagerwelle und/oder eines an der Tretlagerwelle anliegenden Drehmoments für Fahrräder, Ergometer oder stationäre Fitnessgeräte.

### Stand der Technik

Aus der DE 10 2007 046 749 sind Antriebseinrichtungen für Fahrräder bekannt, die eine Drehmomentmessung enthalten. Auch die Ermittlung der Drehrichtung und der Drehzahl z.B. mittels magnetischer Polringe und Hall-Sensoren, oder auf Basis optischer Messverfahren, sind Stand der Technik. Derartige Drehmoment- und/oder DrehzahlSensoren sind bereits seit einigen Jahren auf dem Markt. Sie werden bislang ausschließlich für sogenannte Elektro-Fahrräder (genauer: Fahrräder mit Elektro-Hilfsantrieb, sogenannte "Pedelecs") eingesetzt und dienen der Erkennung ob und wie stark der Fahrer in die Pedale tritt. Hieraus wird eine Information für die Motorsteuerung abgeleitet, die die Motorleistung mit dem Ziel eines harmonischen, angenehmen Fahrverhaltens bedarfsgerecht bereitstellen soll.

Für herkömmliche (durch Muskelkraft angetriebene) Fahrräder sind solche Sensoren bislang nicht sinnvoll einsetzbar, obwohl es einen hohen Bedarf an den Informationen zu "Drehzahl" und "Drehmoment" der Tretlagerwelle gibt. Beispielsweise sind heute mobile Endgeräte verfügbar, die eine Vielzahl von Sensor-Informationen zu empfangen in der Lage sind und so z.B. die Aufzeichnung persönlicher Aktivitätsprotokolle, die Verfolgung körperlicher bzw. sportlicher Bewegung, den Energie-/Ernährungsbedarf ermöglichen. Sportlich ambitionierte Radfahrer wünschen sich Informationen über ihre tatsächlich erbrachte mechanische Leistung (Leistungssensorik) zu Trainings- und Diagnosezwecken. Der Hinderungsgrund, der bislang den Einsatz herkömmlicher Sensoren im Fahrrad-Tretlagerbereich wenig praktikabel macht, liegt in der Schwierigkeit, die Sensorik mit Strom zu versorgen. Strom wird sowohl für die eigentliche Messung als auch für die idealerweise drahtlose Signalübertragung an das Endgerät (z.B. Fahrradcomputer, Smartphone, Smart Watch, Tablet usw.) benötigt. Ein Batteriebetrieb ist aufgrund des häufigen Wechselbedarfs teuer, wenig kundenfreundlich und angesichts der beengten Platzverhältnisse im Tretlagerbereich konstruktiv kaum darstellbar. Auch ein Anschluss an einen vom Rad angetriebenen Generator ("Dynamo") ist unattraktiv, weil die Verkabelung aufwändig und störanfällig ist und nur noch wenige Fahrräder über einen Dynamo verfügen. Aus demselben Grund ist selbst für Elektro-Fahrräder, die über genügend Batteriekapazität verfügen, ein verdrahteter Aufbau nachteilig.

WO 2008/109914 A4 offenbart ein Tretlager mit den Merkmalen der Präambel von Anspruch 1.

### Beschreibung der Erfindung

Aufgabe der Erfindung ist es somit, eine Stromversorgung eines Drehmoment- und/oder Drehzahlsensors im Fahrrad-Tretlager bereitzustellen, ohne auf Batterien, Verkabelung oder eine externe Stromquelle zurückzugreifen.

Diese Aufgabe wird durch ein Tretlager gemäß Patentanspruch 1 gelöst.

Nach einer Weiterbildung der erfindungsgemäßen Vorrichtung kann die Messvorrichtung ein Funkmodul mit einer Antenne zur drahtlosen Datenübertragung zwischen der Messvorrichtung und einem mobilen Terminal umfassen, wobei das Funkmodul insbesondere zur Datenübertragung mittels Bluetooth, ANT, ANT+, ZigBee, Z-Wave oder WLAN ausgebildet ist. Diese Funktechniken sind besonders zur Übertragung von Daten zu einem mobilen Datengerät über kurze Distanzen geeignet.

Gemäß einer anderen Weiterbildung kann die Messvorrichtung auch zum Messen einer Drehrichtung geeignet sein. Dies ist eine besonders vorteilhafte Realisierung einer Drehzahlmessvorrichtung.

In einer bevorzugten Weiterbildung umfasst der elektrische Generator den magnetischen Polring und eine Induktionsspule. Auf diese Weise wird der bereits vorhandene Polring weiterhin zur Erzeugung von elektrischer Energie eingesetzt indem durch die Wechselwirkung der sich drehende Magnetpole auf dem Polring mit wenigstens einer Induktionsspule darin eine elektrische Spannung induziert wird.

Der Polring ist fest mit der Tretlagerwelle verbunden und dreht sich, wobei die Induktionspule sich nicht mit dreht.

Gemäß einer anderen Weiterbildung kann der elektrische Generator ein Lineargenerator sein. Dabei kann sich z.B. eine Exzenterscheibe mit der Tretlagerwelle drehen und den Lineargenerator betätigen. Der Linearmotor kann einen auf diese Weise auf und ab sowie an einer Spule vorbei bewegten Magneten umfassen.

Gemäß einer anderen Weiterbildung kann der elektrische Generator zum Erzeugen einer elektrischen Leistung von 0,1 mW bis 10 W, insbesondere von 1 mW bis 100 mW ausgebildet sein. Dieser Leistungsbereich ist für die Versorgung der Messvorrichtung einschließlich Datenübertragung an ein mobiles Endgerät ausreichend.

Nach einer anderen Weiterbildung kann die die Messvorrichtung dazu ausgebildet sein, aus dem gemessenen Drehmoment und der gemessenen Drehzahl eine mechanische Leistung zu bestimmen. Auf diese Weise kann beispielsweiser die Leistung, die von einem Benutzer eines Fahrrads mit diesem Tretlager aufgewendet wird, bestimmt werden.

Eine andere Weiterbildung besteht darin, dass die Messvorrichtung weiterhin einen Speicher zum Speichern von Messwerten umfassen kann. Somit können Messwerte vorrübergehend gespeichert werden, falls es etwa eine Unterbrechung der drahtlosen Verbindung zum mobilen Terminal gibt.

Gemäß einer anderen Weiterbildung kann die Messvorrichtung weiterhin einen Kondensator und/oder eine wiederaufladbare Batterie umfassen, die derart verschaltet ist, dass durch den elektrischen Generator erzeugte elektrische Energie teilweise speicherbar ist. Somit kann beispielsweise bei einer Unterbrechung der Drehbewegung (und somit Unterbrechung der Erzeugung von elektrischer Energie durch den Generator) eine Energieversorgung der Messvorrichtung weiterhin bereitgestellt werden, um etwa eine Datenübertragung abzuschließen.

Weiterhin kann die Messvorrichtung eine Auswerteeinrichtung zum Verarbeiten von empfangenen Sensordaten umfassen. Die Sensordaten können von Hallsensoren eines Drehzahlsensors und/oder von einem magnetostriktiven Sensor zur Drehmomentmessung stammen.

Weiterhin betrifft die Erfindung ein Fahrrad oder ein stationäres Fitnessgerät / Ergometer mit einem erfindungsgemäßen Tretlager.

Weitere Merkmale und Vorteile der vorliegenden Erfindung werden im Weiteren mit Bezug auf die Figuren beschrieben, die lediglich beispielhafte Ausführungsformen veranschaulichen und nicht den gesamten Umfang der Erfindung darstellen. Es versteht sich, dass die gezeigten Merkmale in anderen Kombinationen, als in den Beispielen beschrieben, im Rahmen der Erfindung Verwendung finden können.

### Kurzbeschreibung der Zeichnungen

- Figur 1: illustriert eine Ausführungsform eines Tretlagers.
- Figur 2: illustriert die Ausführungsform des erfindungsgemäßen Tretlagers.
- Figur 3: illustriert eine Ausführungsform eines Tretlagers.

### Beschreibung der Ausführungsformen

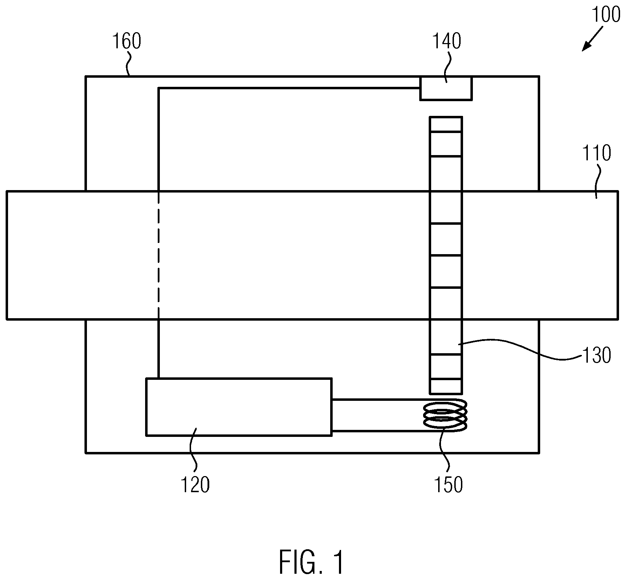

Figur 1 zeigt eine Ausführungsform 100 eines Tretlagers.

Das Tretlager 100 umfasst eine Tretlagerwelle 110, eine Messvorrichtung 120, 130, 140 zum Messen einer Drehzahl der Tretlagerwelle 110 und einen im Tretlager 100 angeordneten elektrischen Generator 150, 130 zur Versorgung der Messvorrichtung mit elektrischer Energie. Die Messvorrichtung besteht hier aus einem Polring 130, der auf dem äußeren Rand mit alternierend angeordneten magnetischen Nord- und Südpolen versehen ist, einem oder mehreren Hallsensoren 140 zum Erfassen der Magnetfelder der Nord- und Südpole des sich drehenden Polrings. Daraus kann die Drehzahl des Polrings und somit der Tretlagerwelle 110 ermittelt werden. Die Messvorrichtung umfasst dazu weiterhin eine Auswerteeinrichtung 120, welche die Signale des bzw. der Hallsensoren 140 verarbeitet. Durch einen Phasenversatz in der Anordnung der Hallsensoren 140 gegenüber der Periodizität der Nord- und Südpole des Polrings 130 kann auch auf die Drehrichtung geschlossen werden. Der elektrische Generator 130, 150 umfasst hier das bereits beschriebene Polrad 130 sowie eine Spule 150, an der die magnetischen Pole des Polrads 130 bei dessen Drehung vorbeigeführt werden und in der Spule 150 eine Spannung induzieren. Diese so erzeugte elektrische Energie wird der Messvorrichtung 120, 130, 140, insbesondere der Auswerteeinrichtung 120 zugeführt. Die genannten Bestandteile sind in einem Tretlagergehäuse 160 angeordnet, wobei lediglich die Tretlagerwelle 110 zu beiden Seiten heraussteht und wobei an dessen Enden jeweils eine Tretkurbel angebracht ist, die durch einen Benutzer mechanisch betätigt werden.

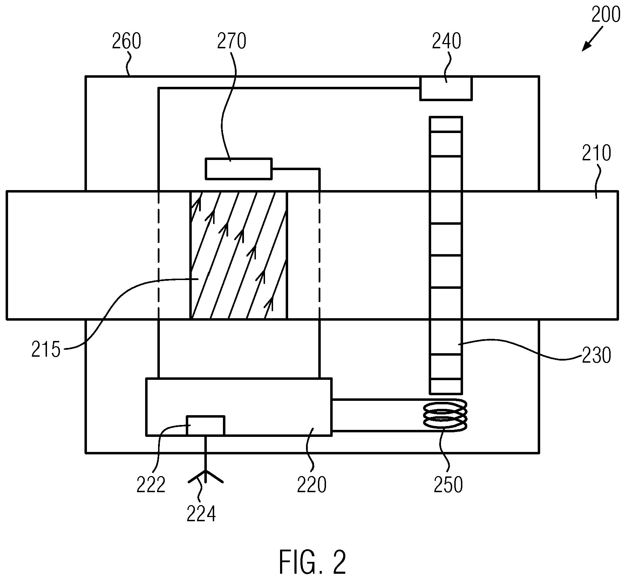

Figur 2 zeigt die Ausführungsform 200 des erfindungsgemäßen Tretlagers.

Gleiche Elemente aus der Figur 1 sind hier mit gleichen Bezugszeichen versehen, wobei lediglich die Hunderterziffer auf 2 erhöht ist.

Hier umfasst die Messvorrichtung weiterhin einen magnetostriktiven Sensor 215, 270, der aus einem in Umfangsrichtung magnetisierten Bereich 215 der Tretlagerwelle 210 und einem Magnetfeldsensor 270 besteht. Die Auswerteeinrichtung 220 ist zur Bestimmung eines an der Tretlagerwelle 210 anliegenden Drehmoments ausgebildet. Weiterhin ist eine Sendemodul 222 mit einer Antenne 224 vorgesehen, um Datensignale von der Auswerteeinheit 220 an einen nicht dargestellten mobilen Terminal zu übertragen.

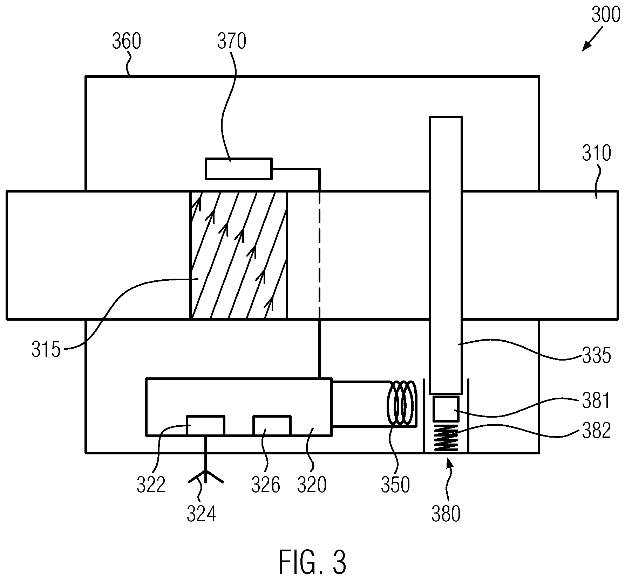

Figur 3 zeigt eine Ausführungsform 300 eines Tretlagers. Gleiche Elemente aus den Figuren 1 und 2 sind hier mit gleichen Bezugszeichen versehen, wobei lediglich die Hunderterziffer auf 3 erhöht ist.

Hier ist lediglich ein Drehmomentsensor 315, 370 jedoch kein Drehzahlsensor dargestellt. Anstelle des Polrads der Figuren 1 und 2 ist ein Rad 335 mit einer periodischen Struktur auf dem Umfang an der Welle 310 angeordnet. Beispielsweise kann die Entfernung von Mittelpunkt des Rades 335 zum Umfang in Form einer Kosinusfunktion um einen mittleren Radius variieren, wobei der Umfang in eine ganzzahliche Anzahl von Perioden aufgeteilt ist. Bei einer Drehung betätigt der Umfang des Rads 335 mit veränderlichem Radius einen Lineargenerator 380. Dieser umfasst einen Magneten 381 der innerhalb einer Führung mit einem Federelement 382 gelagert ist und durch den Umfang des Rads 335 auf und ab bewegt wird. Weiterhin ist eine Spule 350 vorgesehen, in der durch die Bewegung des Magneten 381 eine Spannung induziert wird. In der Auswerteeinrichtung 320 ist hier zusätzlich ein Kondensator 326 vorgesehen, der die elektrische Energie vom Lineargenerator 380 teilweise speichert, um bei einer Unterbrechung der Energielieferung durch den Lineargenerator 380 die Messvorrichtung weiterhin mit elektrischer Energie versorgen zu können, insbesondere die Auswerteeinrichtung 320 und das Sendemodul 322.

Zusammenfassend: Der Strombedarf der Sensorik im Tretlager (und zwar für die eigentliche Sensorik und für die drahtlose Signalübertragung) wird durch einen integrierten Miniaturgenerator gedeckt: aus der Drehbewegung der Tretlagerwelle wird analog zu einem radangetriebenen Dynamo elektrische Energie im Bereich 1 ... 100 mW erzeugt. In einer besonders vorteilhaften Ausführung genügt ein Polring, der für die Erkennung von Drehzahl und Drehrichtung verwendet wird, zur gleichzeitigen Stromerzeugung durch Induktionsspulen. Aus den Informationen "Drehmoment" und "Drehzahl" ist unmittelbar die mechanische Leistung zugänglich, deren zeitlicher Verlauf den Energieverbrauch ergibt. Diese Daten werden drahtlos z.B. per Bluetooth, ANT oder ähnlichen Protokollen an ein Endgerät übermittelt und stehen dort für die weitere Auswertung, Speicherung usw. zur Verfügung. Auf diese Weise können herkömmliche Fahrräder oder stationäre Fitnessgeräte / Ergometer ohne störende und aufwändige bauliche Veränderungen (insbesondere ohne Verkabelung) wertvolle Daten drahtlos bereitstellen. Als Vorteile sind zu nennen: Minimaler Bauteilaufwand, einfachste Integrierbarkeit in herkömmliche Fahrräder bzw. Ergometer / Fitnessgeräte; Drahtlosigkeit: Vermeidung des konstruktiven Aufwands, der Kosten und Fehleranfälligkeit einer Verkabelung; Nutzerfreundlichkeit: Vermeidung des regelmäßigen Batteriewechsels oder -nachladens oder eine evtl. vorhandene Batterie wird durch den Generator wieder aufgeladen.

## Patentansprüche

1. Tretlager (200), umfassend:
eine Tretlagerwelle (210);
eine Messvorrichtung (220, 230, 240) zum Messen einer Drehzahl der Tretlagerwelle und eines an der Tretlagerwelle anliegenden Drehmoments;
einen im Tretlager (200) angeordneten elektrischen Generator (230, 250) zum Umwandeln von mechanischer Energie aus einer Drehbewegung der Tretlagerwelle in elektrische Energie zur Versorgung der Messvorrichtung mit elektrischer Energie;
**dadurch gekennzeichnet, dass**
die Messvorrichtung zum Messen einer Drehzahl der Tretlagerwelle (210) einen drehfest an der Tretlagerwelle angeordneten magnetischen Polring (230) und wenigstens einen Hallsensor (240) umfasst; und
die Messvorrichtung zum Messen eines an der Tretlagerwelle (210) anliegenden Drehmoments einen magnetostriktiven Sensor (215, 270) umfasst, wobei der magnetostriktive Sensor einen permanent magnetisierten Bereich (215) der Tretlagerwelle und einen Magnetfeldstärkesensor (270) umfasst.

2. Tretlager nach Anspruch 1, wobei die Messvorrichtung ein Funkmodul (222) mit einer Antenne zur drahtlosen Signalübertragung zwischen der Messvorrichtung und einem mobilen Terminal umfasst, wobei das Funkmodul insbesondere zur Signalübertragung mittels Bluetooth, ANT, ANT+, ZigBee, Z-Wave oder WLAN ausgebildet ist.

3. Tretlager nach Anspruch 1 oder 2, wobei die Messvorrichtung auch zum Messen einer Drehrichtung geeignet ist.

4. Tretlager nach einem der Ansprüche 1, bis 3, wobei der elektrische Generator den magnetischen Polring und eine Induktionsspule umfasst.

5. Tretlager nach einem der Ansprüche 1 bis 3, wobei der elektrische Generator ein Lineargenerator ist.

6. Tretlager nach einem der Ansprüche 1 bis 5, wobei der elektrische Generator zum Erzeugen einer elektrischen Leistung von 0,1 mW bis 10 W, insbesondere von 1 mW bis 100 mW ausgebildet ist.

7. Tretlager nach einem der Ansprüche 1 bis 6, wobei die die Messvorrichtung dazu ausgebildet ist, aus dem gemessenen Drehmoment und der gemessenen Drehzahl eine mechanische Leistung zu bestimmen.

8. Tretlager nach einem der Ansprüche 1 bis 7, wobei die Messvorrichtung weiterhin einen Speicher zum Speichern von Messwerten umfasst.

9. Tretlager nach einem der Ansprüche 1 bis 8, wobei die Messvorrichtung weiterhin einen Kondensator und/oder eine wiederaufladbare Batterie umfasst, derart verschaltet, dass durch den elektrischen Generator erzeugte elektrische Energie teilweise speicherbar ist.

10. Tretlager nach einem der Ansprüche 1 bis 9, wobei die Messvorrichtung eine Auswerteeinrichtung (120) zum Verarbeiten von empfangenen Sensordaten umfasst.

11. Vorrichtung mit einem Tretlager nach einem der Ansprüche 1 bis 10, wobei die Vorrichtung ein Fahrrad, ein Ergometer oder ein Fitnessgerät ist.

## Claims

1. Bottom bracket (200) comprising:
a bottom bracket spindle (210);
a measuring device (220, 230, 240) for measuring a rotational speed of said bottom bracket spindle and a torque applied to said bottom bracket spindle;
an electric generator (230, 250) arranged in said bottom bracket (200) for converting mechanical energy from a rotational motion of said bottom bracket spindle into electrical energy for supplying said measuring device with electrical energy;
**characterized in that**
said measuring device for measuring a rotational speed of said bottom bracket spindle (210) comprises a magnetic pole ring (230) arranged in a rotationally fixed manner on said bottom bracket spindle and at least one Hall sensor (240); and
said measuring device for measuring a torque applied to said bottom bracket spindle (210) comprises a magnetostrictive sensor (215, 270), where said magnetostrictive sensor comprises a permanently magnetized region (215) of said bottom bracket spindle and a magnetic field strength sensor (270).

2. Bottom bracket according to claim 1, where said measuring device comprises a radio module (222) with an antenna for wireless signal transmission between said measuring device and a mobile terminal, where said radio module is configured in particular for signal transmission by way of Bluetooth, ANT, ANT +, ZigBee, Z-Wave or WLAN.

3. Bottom bracket according to claim 1 or 2, where said measuring device is also suitable for measuring a direction of rotation.

4. Bottom bracket according to one of claims 1 to 3, where said electric generator comprises said magnetic pole ring and an induction coil.

5. Bottom bracket according to one of the claims 1 to 3, where said electric generator is a linear generator.

6. Bottom bracket according to one of the claims 1 to 5, where said electric generator is designed to generate electrical power of 0.1 mW to 10 W, in particular, of 1 mW to 100 mW.

7. Bottom bracket according to one of the claims 1 to 6, where said measuring device is designed to determine the mechanical output from the torque measured and the rotational speed measured.

8. Bottom bracket according to one of the claims 1 to 7, where said measuring device further comprises a memory for storing measured values.

9. Bottom bracket according to one of the claims 1 to 8, where said measuring device further comprises a capacitor and/or a rechargeable battery which is connected in such a way that electrical energy generated by said electric generator can be stored in part.

10. Bottom bracket according to one of the claims 1 to 9, where said measuring device comprises an evaluation device (120) for processing sensor data received.

11. Device with a bottom bracket according to one of the claims 1 to 10, where said device is a bicycle, an ergometer or a fitness machine.

## Revendications

1. Palier de pédalier (200) comprenant :
un arbre de palier de pédalier (210) ;
un dispositif de mesure (220, 230, 240) pour mesurer une vitesse de rotation de l'arbre de palier de pédalier et un couple appliqué à l'arbre de palier de pédalier ;
un générateur électrique (230, 250) agencé dans le palier de pédalier (200), pour convertir de l'énergie mécanique provenant d'un mouvement de rotation de l'arbre de palier de pédalier, en énergie électrique pour alimenter le dispositif de mesure en énergie électrique ;
**caractérisé en ce que**
le dispositif de mesure comprend, pour assurer la mesure d'une vitesse de rotation de l'arbre de palier de pédalier (210), un anneau polaire magnétique (230) agencé de manière fixe en rotation sur l'arbre de palier de pédalier, et au moins un capteur à effet Hall (240) ; et
le dispositif de mesure comprend, pour assurer la mesure d'un couple appliqué à l'arbre de palier de pédalier (210), un capteur magnétostrictif (215, 270), le capteur magnétostrictif comprenant une zone (215) à aimantation permanente de l'arbre de palier de pédalier, et un capteur d'intensité de champ magnétique (270).

2. Palier de pédalier selon la revendication 1, dans lequel le dispositif de mesure comprend un module de radiocommunications (222) avec une antenne pour la transmission de signal, sans fil, entre le dispositif de mesure et un terminal mobile, le module de radiocommunications étant conçu notamment pour la transmission de signal selon les protocoles de communications Bluethooh, ANT, ANT+, ZigBee, Z-Wawe ou WLAN.

3. Palier de pédalier selon la revendication 1 ou la revendication 2, dans lequel le dispositif de mesure est également adapté à mesurer un sens de rotation.

4. Palier de pédalier selon l'une des revendications 1 à 3, dans lequel le générateur électrique comprend l'anneau polaire magnétique et une bobine d'induction.

5. Palier de pédalier selon l'une des revendications 1 à 3, dans lequel le générateur électrique est un générateur linéaire.

6. Palier de pédalier selon l'une des revendications 1 à 5, dans lequel le générateur électrique est conçu pour produire une puissance électrique de 0,1 mW à 10 W, notamment de 1 mW à 100 mW.

7. Palier de pédalier selon l'une des revendications 1 à 6, dans lequel le dispositif de mesure est conçu pour déterminer une puissance mécanique à partir du couple mesuré et de la vitesse de rotation mesurée.

8. Palier de pédalier selon l'une des revendications 1 à 7, dans lequel le dispositif de mesure comprend, en outre, une mémoire pour la mémorisation de valeurs de mesure.

9. Palier de pédalier selon l'une des revendications 1 à 8, dans lequel le dispositif de mesure comprend, en outre, un condensateur et/ou une batterie rechargeable, qui sont mis en circuit de manière à pouvoir stocker, au moins en partie, de l'énergie électrique produite par le générateur électrique.

10. Palier de pédalier selon l'une des revendications 1 à 9, dans lequel le dispositif de mesure comprend un dispositif de traitement de données (120) pour traiter des données de capteur reçues.

11. Dispositif comprenant un palier de pédalier selon l'une des revendications 1 à 10, dans lequel le dispositif est un vélo, un ergomètre ou un appareil de fitness.
